(19) Europäisches Patentamt / European Patent Office / Office européen des brevets

(11) **EP 4 678 364 A1**

(12) **EUROPEAN PATENT APPLICATION**
published in accordance with Art. 153(4) EPC

(43) Date of publication:
**14.01.2026 Bulletin 2026/03**

(21) Application number: **24766711.6**

(22) Date of filing: **26.01.2024**

(51) International Patent Classification (IPC):
**B28B 1/30** (2006.01)   **C01B 33/40** (2006.01)
**C25B 13/05** (2021.01)   **H01M 8/12** (2016.01)
**H01M 8/0282** (2016.01)

(52) Cooperative Patent Classification (CPC):
**B28B 1/30; C01B 33/40; C25B 13/05;**
**H01M 8/0282; H01M 8/12;** Y02E 60/50

(86) International application number:
**PCT/JP2024/002513**

(87) International publication number:
**WO 2024/185336 (12.09.2024 Gazette 2024/37)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **09.03.2023 JP 2023036729**

(71) Applicant: NICHIAS CORPORATION
**Tokyo 104-8555 (JP)**

(72) Inventors:
• **OIKAWA, Jun**
  **Tokyo 104-8555 (JP)**
• **HARA, Ryota**
  **Tokyo 104-8555 (JP)**
• **MORIYASU, Ryosuke**
  **Tokyo 104-8555 (JP)**

(74) Representative: **Mathys & Squire**
  **The Shard**
  **32 London Bridge Street**
  **London SE1 9SG (GB)**

(54) **SHEET, SEALING MATERIAL, FUEL CELL, ELECTROLYTIC CELL, METHOD FOR PRODUCING SHEET, AND METHOD FOR PRODUCING SEALING MATERIAL**

(57) To provide a sheet and a sealing material which contain clay as a base and are excellent in water resistance in a high-temperature environment. The sheet contains swelling clay and non-swelling clay. The swelling clay contains a first component and a second component having a structure different from a structure of the first component. The non-swelling clay is clay in which ions of the first component and the second component are exchanged in a dispersion medium, and is clay that exhibits a non-swelling property by heating. The sheet includes the first component, the second component, and a third component that is optionally contained. The first component is the swelling clay in which an interlayer is substituted with Li, the second component is Na-type montmorillonite or K-type montmorillonite, the third component is a filler. In the sheet, when a total weight of the first component, the second component, and the third component is set to 100 wt%, a content of the first component is 25 wt% or more and 80 wt% or less, a content of the second component is 10 wt% or more and 50 wt% or less, and a content of the third component is 0 wt% or more and 80 wt% or less.

FIG. 5A

| | | UNIT | EXPERI-MENTAL EXAMPLE 1 | EXPERI-MENTAL EXAMPLE 2 | EXPERI-MENTAL EXAMPLE 3 | EXPERI-MENTAL EXAMPLE 4 | EXPERI-MENTAL EXAMPLE 5 | EXPERI-MENTAL EXAMPLE 6 | EXPERI-MENTAL EXAMPLE 7 | EXPERI-MENTAL EXAMPLE 8 | EXPERI-MENTAL EXAMPLE 9 | EXPERI-MENTAL EXAMPLE 10 |
|---|---|---|---|---|---|---|---|---|---|---|---|---|
| COMPOSITION | SiO₂ | wt% | 60.0 | 60.6 | 62.4 | 59.7 | 56.7 | 46.9 | 59.7 | 55.6 | 59.3 | 44.6 |
| | Al₂O₃ | wt% | 19.0 | 19.4 | 20.3 | 19.1 | 34.2 | 16.6 | 18.9 | 35.7 | 17.3 | 16.0 |
| | MgO | wt% | 16.5 | 15.1 | 11.0 | 16.9 | 1.6 | 16.4 | 17.2 | 1.3 | 19.4 | 17.9 |
| | Na₂O | wt% | 0.4 | 0.8 | 2.0 | n.d. | 0.8 | 1.0 | 0.2 | 0.4 | 0.4 | 0.6 |
| | K₂O | wt% | 2.5 | 2.2 | 1.4 | 3.1 | 4.5 | 4.0 | 2.6 | 5.0 | 2.5 | 4.5 |
| | TiO₂ | wt% | 0.1 | 0.1 | 0.2 | n.d. | 0.2 | 1.5 | 0.1 | 0.2 | 0.1 | 1.6 |
| | Fe₂O₃ | wt% | 0.8 | 1.0 | 1.7 | 0.8 | 1.4 | 11.5 | 0.7 | 1.2 | 0.5 | 12.6 |
| | CaO | wt% | 0.2 | 0.3 | 0.5 | 0.1 | 0.2 | 1.1 | 0.2 | 0.1 | 0.1 | 1.2 |
| | OTHERS | wt% | 0.5 | 0.5 | 0.5 | 0.3 | 0.5 | 1.0 | 0.4 | 0.5 | 0.4 | 1.1 |
| PERFORMANCE / MANUFAC-TURABILITY | WARPAGE IN THICKNESS OF 0.5mm | — | ○ | ○ | ○ | ○ | ○ | ○ | ○ | ○ | ○ | ○ |
| WATER RESISTANCE IMMERSION IN PURE WATER 24H | AFTER HEATING AT 300℃ | — | ○ | ○ | ○ | ○ | ○ | ○ | × | × | × | × |
| | | wt% | 31 | 19 | 34 | 25 | 36 | 43 | — | — | — | — |
| | AFTER HEATING AT 600℃ | — | ○ | ○ | ○ | ○ | ○ | ○ | ○ | ○ | ○ | × |
| | | wt% | 18 | 15 | 7 | 20 | 12 | 36 | 21 | 16 | 18 | — |
| | AFTER HEATING AT 700℃ | — | ○ | ○ | ○ | ○ | ○ | ○ | ○ | ○ | ○ | ○ |
| | | wt% | 18 | 15 | 10 | 20 | 8 | 11 | 20 | 11 | 16 | 15 |

EP 4 678 364 A1

**Description**

TECHNICAL **FIELD**

The present invention relates to a sheet, a sealing material, a fuel cell, an electrolytic cell, a method for manufacturing a sheet, and a method for manufacturing a sealing material.

BACKGROUND ART

Sealing materials such as gaskets and packings are used in a device, a piping flange in various industries. As the gaskets, sheet gaskets, spiral wound gaskets, serrated gaskets, and the like are known.

Particularly, a sheet containing clay as a main component is used as a high-temperature gasket. A clay sheet is classified into non-swelling clay and swelling clay.

For example, Patent Literature 1 discloses a sealing material which contains talc as the non-swelling clay, and in which an inorganic fiber and a binder are blended. In addition, Patent Literature 2 discloses a sheet containing modified vermiculite as the swelling clay, and a sealing material using the sheet. Patent Literature 3 discloses a sheet containing montmorillonite that is a type of smectite as the swelling clay, and a sealing material using the sheet. Patent Literature 4 discloses a sealing material in which interlayer Na contained in montmorillonite is exchanged for Li, and is heated.

CITATION LIST

PATENT LITERATURE

PATENT LITERATURE 1: International Publication No. 2017/115399
PATENT LITERATURE 2: Japanese Patent No. 6999649
PATENT LITERATURE 3: Japanese Patent No. 3855003
PATENT LITERATURE 4: Japanese Patent No. 4973856
PATENT LITERATURE 5: JP 2022-109896 A

SUMMARY OF INVENTION

TECHNICAL PROBLEM

In general, a fuel cell or an electrolytic cell is maintained at a temperature of 300°C or higher after stack assembly to remove an organic material in a raw material (binder removal) (for example, Patent Literature 5). In addition, since the fuel cell or the electrolytic cell is caused to pass through aqueous fluids including water vapor, it is preferable that a gasket that is used in the fuel cell or the electrolytic cell exhibits water resistance in a heat treatment at approximately 300°C.

A sealing material that is used in a high-temperature environment is required to have high water resistance or steam resistance, but in a case of using the clay sheet using the swelling clay in the related art as the sealing material, there is a concern that the water resistance after heating at 300°C may not be maintained.

In addition, since the sealing material containing the non-swelling clay, the fiber, and the binder disclosed in Patent Literature 1 contains the fiber, a sealing property is not sufficient. In addition, in a case of using an organic binder or an organic fiber, in a high temperature environment, organic components are burned up, voids are generated, and the sealing property deteriorates. In addition, silicone may be used as the inorganic binder, but a siloxane-based outgas is generated in a high-temperature environment, and thus the sealing material cannot be used in the vicinity of an electronic component or an electrode.

The modified vermiculite disclosed in Patent Literature 2 can be made into a sheet without using a fiber and a binder, and has the sealing property in a high-temperature environment. However, modified vermiculite contains a large amount of iron, and is conductive, and thus there is a limitation in use in the vicinity of an electronic component or an electrode required to have an insulation property.

The smectite disclosed in Patent Literature 3 can be made into a sheet without using a fiber and a binder. However, warpage or significant shrinkage occurs in a high-temperature environment, and there is a problem in dimensional stability. In addition, since gelation is likely to occur at a relatively low concentration in manufacturing, warpage is likely to occur when drying, and thus there is a problem in formability of a thick film.

Patent Literature 4 discloses a sheet in which interlayer Na contained in montmorillonite is exchanged for Li and is heated to move the interlayer Li to an octahedral layer, thereby imparting water resistance. However, the sheet has insufficient heat resistance in a high-temperature environment, and warpage is likely to occur. Therefore, there is a problem in formability of a thick film.

An object of the invention is to provide a sheet and a sealing material which contain swelling clay as a base component and have excellent water resistance in a high-temperature environment, and of which manufacturability is improved, a fuel cell and an electrolytic cell which use the sealing material, a method for manufacturing a sheet, and a method for manufacturing a sealing material.

SOLUTION TO PROBLEM

The present inventors have made a thorough investigation, and as a result, they have found that a sheet having excellent water resistance in a high-temperature environment can be obtained by drying slurry obtained by adding a solvent such as water to swelling clay in which an interlayer is substituted with Li, and smectite.

The invention relates to a sheet, a sealing material, a fuel cell and an electrolytic cell which use the sealing material, a method for manufacturing a sheet, and a method for manufacturing a sealing material to be described below.

[1] A sheet, containing:

swelling clay; and
non-swelling clay,
in which the swelling clay contains a first component and a second component having a structure different from a structure of the first component, and
the non-swelling clay is clay in which ions of the first component and the second component are exchanged in a dispersion medium, and which exhibits a non-swelling property by heating.

[2] The sheet according to [1], containing:

the first component;
the second component; and
a third component that is optionally contained,
in which the first component is the swelling clay in which an interlayer is substituted with Li,
the second component is Na-type montmorillonite or **K**-type montmorillonite,
the third component is a filler, and
when a total weight of the first component, the second component, and the third component is set to 100 wt%, a content of the first component is 25 wt% or more and 80 wt% or less, a content of the second component is 10 wt% or more and 50 wt% or less, and a content of the third component is 0 wt% or more and 80 wt% or less.

[3] The sheet according to [1] or [2],
in which a water absorption rate is 50% or less in an immersion test in pure water for 24 hours after heating at 300°C for 24 hours.
[4] The sheet according to [1] or [2],
in which a water absorption rate is 50% or less in an immersion test in pure water for 24 hours after heating at 300°C for 24 hours, and the water absorption rate is 25% or less in an immersion test in pure water for 24 hours after heating at 600°C for 24 hours.
[5] The sheet according to [1] or [2],
in which a water absorption rate is 50% or less in an immersion test in pure water for 24 hours after heating at 300°C for 24 hours, and the water absorption rate is 20% or less in an immersion test in pure water for 24 hours after heating at 700°C for 24 hours.
[6] The sheet according to [1] or [2],
in which when a weight of the entire sheet is set to 100 wt%, a content of iron oxide is 6 wt% or less.
[7] The sheet according to [1] or [2],

in which the first component is swollen muscovite, and
in the swollen muscovite, at least a part of $K^+$ ions existing in an interlayer of muscovite is exchanged for $Li^+$ ion.

[8] The sheet according to [1] or [2],
in which as the filler, talc, muscovite, sericite, kaolinite, or molten silica is contained.
[9] A sealing material, including:

the sheet according to [1] or [2].

[10] The sealing material according to [9],

in which the sealing material is a sealing material for a fuel cell or an electrolytic cell.

[11] A fuel cell or an electrolytic cell, including:

the sealing material according to [10].

[12] A method for manufacturing the sheet according to [2], including:

a step of mixing the first component, the second component, and the third component to form a mixture; and
a step of exchanging ions of the first component and the second component, molding the mixture in a sheet shape, and heating the resultant sheet.

[13] A method for manufacturing a sealing material, including:

a step of incorporating the sheet manufactured by the method for manufacturing a sheet according to [12] as a part of a gasket or a packing.

ADVANTAGEOUS EFFECTS OF INVENTION

The sheet of the invention contains swelling clay and non-swelling clay. Swelling clay in which an interlayer is substituted with Li and Na-type montmorillonite or K-type montmorillonite that is smectite as the swelling clay, and clay in which ions of the first component and the second component are exchanged in a dispersion medium and which exhibits a non-swelling property by heating as the non-swelling clay are contained, and thus it is possible to obtain a sheet in which a water absorption rate is low and which has high water resistance. In addition, warpage does not occur even when being formed as a thick film sheet, and high manufacturability is provided. In addition, since smectite functions as a binder, high handling strength is provided.

Accordingly, it is possible to achieve high heat resistance, high water resistance, high manufacturability, a high sealing property, and a reduction in an outgas which are not achieved in the related art.

BRIEF DESCRIPTION OF DRAWINGS

[FIG. 1A] FIG. 1A is a table showing the type and the amount of components in blending in Experimental Examples 1 to 10.

[FIG. 1B] FIG. 1B is a table showing the type and the amount of components in blending in Experimental Examples 10-1 to 10-4.

[FIG. 2] FIG. 2 is a table showing the type and the amount of components in blending in Experimental Examples 11 to 20.

[FIG. 3A] FIG. 3A is a table showing the type and the amount of components in formation of a sheet in Experimental Examples 1 to 10.

[FIG. 3B] FIG. 3B is a table showing the type and the amount of components in formation of a sheet in Experimental Examples 10-1 to 10-4.

[FIG. 4] FIG. 4 is a table showing the type and the amount of components in formation of a sheet in Experimental Examples 11 to 20.

[FIG. 5A] FIG. 5A is a table showing sheet evaluation results in Experimental Examples 1 to 10.

[FIG. 5B] FIG. 5B is a table showing sheet evaluation results in Experimental Examples 10-1 to 10-4.

[FIG. 6] FIG. 6 is a table showing sheet evaluation results in Experimental Examples 11 to 20.

DESCRIPTION OF EMBODIMENTS

Hereinafter, an embodiment of the invention (hereinafter, referred to as "this embodiment") will be described with reference to the drawings. This embodiment relates to a sheet, a sealing material, a fuel cell, an electrolytic cell, a method for manufacturing a sheet, and a method for manufacturing a sealing material.

<Definition>

In this specification, ∘ to △ (for example, ∘ wt% to △ wt%) represents ∘ or more and △ or less (∘ wt% or more and △ wt% or less).

In addition, a term "contains (includes)" or a term "containing (including)" in this specification means that a specified component is contained (included), but it is not intended to exclude presence of other components.

<Sheet>

A sheet of this embodiment can be used for, for example, a sealing material. The sheet of this embodiment includes swelling clay and non-swelling clay. The swelling clay contains a first component and a second component having a structure different from that of the first component. **In** addition, the non-swelling clay is clay in which ions of the first component and the second component are exchanged in a dispersion medium, and which exhibits a non-swelling property by heating.

For example, the first component is swelling clay in which an interlayer is substituted with Li such as swollen muscovite (Li-type muscovite) or swollen vermiculite (Li-type vermiculite), and the second component is swelling smectite such as Na-type montmorillonite, or K-type montmorillonite.

<Swelling Clay>

In the invention, swelling clay is contained as a blending component of the sheet. The sheet has a composition containing a clay layer that is swelling clay in which an interlayer is substituted with Li (hereinafter, referred to as "Li-type clay layer") such as Li-type muscovite or Li-type vermiculite, and smectite that is swelling clay such as Na-type montmorillonite or K-type montmorillonite.

Any of the Li-type clay layer and the smectite which are raw materials of the invention is swelling clay and does not have water resistance in an elementary substance state. Here, when mixing the swelling clay containing $Li^+$ ions in an interlayer and the smectite, the $Li^+$ ions move to an interlayer of the smectite, and when the $Li^+$ ions in the interlayer of the smectite are heated, the $Li^+$ ions move from the interlayer to an octahedral layer. Accordingly, since hydrophilic $Li^+$ ions move from the interlayer, water resistance is exhibited.

For example, when mixing two types including Li-type muscovite as the Li-type clay layer and Na-type montmorillonite as the smectite in a state of an aqueous dispersion, interlayer $Li^+$ ions are supplied from the Li-type muscovite to the Na-type montmorillonite, and thus Li-type montmorillonite can be obtained. On the other hand, interlayer $Na^+$ ions of the Na-type montmorillonite move to an interlayer of the Li-type muscovite, and thus Na-type muscovite can be obtained. When water is removed from a mixed solution that is obtained, and heating is performed, $Li^+$ ions of the Li-type montmorillonite move to the octahedral layer, and thus it is possible to impart water resistance.

It is preferable that interlayer ions of smectite are ions other than the $Li^+$ ions. In a case of ions other than the $Li^+$ ions, the Li-type clay layer can also be made to have water resistance with ions flowing from the smectite into the Li-type clay layer. Particularly, it is preferable that the interlayer ions are $K^+$ ions, $Na^+$ ions, $Ca^{2+}$ ions, or $Mg^{2+}$ ions. This is because the $K^+$ ions, $Na^+$ ions, $Ca^{2+}$ ions, or $Mg^{2+}$ ions are inexpensive, have high solubility in water, and can be easily ion-exchanged. Among these, the $Na^+$ ions or the $Ca^{2+}$ ions are particularly preferable. This is because the $Na^+$ ions or the $Ca^{2+}$ ions exist in natural smectite, and thus an ion exchange treatment to be performed in advance can be omitted.

<Non-Swelling Clay>

In the invention, the non-swelling clay is contained as a blending component of the sheet. The non-swelling clay is clay that is obtained by ion exchange of the Li-type clay layer and the smectite in a dispersion medium, and exhibits a non-swelling property by heating. Here, Table 1 shows whether a swelling property is exhibited or the non-swelling property is exhibited when heat treatment is performed. In Table 1, a clay layer exhibiting the swelling property is "o", and a clay layer exhibiting the non-swelling property is "x".

[Table 1]

| Clay layer | | Muscovite | | Vermiculite | | Montmorillonite | | Saponite | |
|---|---|---|---|---|---|---|---|---|---|
| Heat Treatment | | 100°C | 300°C | 100°C | 300°C | 100°C | 300°C | 100°C | 300°C |
| Interlayer ion | Li | ○ | ○ | ○ | ○ | ○ | × | ○ | ○ |
| | Na | × | × | × | × | ○ | ○ | ○ | ○ |
| | K | × | × | × | × | ○ | ○ | ○ | ○ |
| | Mg | × | × | × | × | ○ | ○ | ○ | ○ |
| | Ca | × | × | × | × | ○ | ○ | ○ | ○ |

As shown in Table 1, in a case where muscovite or vermiculite is subjected to a heat treatment at 300°C, the swelling property is exhibited when $Li^+$ ions are contained in an interlayer, and the non-swelling property is exhibited when $Na^+$ ions, $K^+$ ions, $Mg^{2+}$ ions, or $Ca^{2+}$ ions are contained in an interlayer due to fixation of interlayer ions.

In addition, in a case where montmorillonite or saponite that is smectite is subjected to a heat treatment at 300°C, materials other than montmorillonite containing $Li^+$ ions in an interlayer exhibit the swelling property. The montmorillonite containing the $Li^+$ ions in the interlayer exhibits the non-swelling property due to movement of the interlayer ions in the interlayer.

Accordingly, with regard to the sheet of the invention, Li-type muscovite or Li-type vermiculite (first component) which is swelling clay and swelling smectite (second component) are mixed, interlayer ion exchange is performed, and heating is performed to form a sheet containing the swelling clay and the non-swelling clay.

(First Component)

The first component is preferably a clay layer that contains $Li^+$ ions as interlayer ions and exhibits the swelling property. The type of the clay layer in the sheet of the invention is not limited, and examples thereof include Li-type muscovite, Li-type vermiculite, Li-type phlogopite, and the like as long as these materials are swelling clay materials containing $Li^+$ ions in an interlayer. Note that for use as a gasket of industrial devices, it is preferable to use Li-type muscovite because the content of iron and impurities is small.

The first component is, for example, swelling clay in which an interlayer is substituted with Li, and preferably swollen muscovite. Here, "muscovite" is a concept including "sericite" that is another name in a case of fine grains. In addition, the swollen muscovite includes "swollen sericite" in a case of fine grains. In the swollen muscovite, at least a part of $K^+$ ions existing in an interlayer of muscovite is exchanged for at least one or more kinds of ions (ions imparting the swelling property) selected from the group consisting of $Li^+$ ions, $Ca^{2+}$ ions, and $Mg^{2+}$ ions. In the swollen sericite, at least a part of $K^+$ ions existing in an interlayer of sericite is exchanged for at least one or more kinds of ions (ions imparting the swelling property) selected from the group consisting of $Li^+$ ions, $Ca^{2+}$ ions, and $Mg^{2+}$ ions. Note that the swelling clay in which an interlayer is substituted with Li may be modified vermiculite (swollen vermiculite) without limitation to the swollen muscovite.

The muscovite is a type of silicate mineral (phyllosilicate mineral), is represented by a chemical formula $K_2Al_4$ $(Si_6 \cdot Al_2)O_{20}OH)_4$, and has a triple structure containing Al and K between layers of silicate tetrahedrons. The sericite is a fine grain of the muscovite that is a layered silicate mineral. From the viewpoint of preventing a fluorine-based gas from being generated, it is preferable that the muscovite used in this embodiment is not fluorine mica type muscovite that contains fluorine.

The swelling clay in which an interlayer is substituted with Li as the first component can be obtained by exchanging at least a part of $K^+$ ions existing in an interlayer of clay for ions such as $Li^+$ ions through modification. The modification of the muscovite is not particularly limited, but can be achieved, for example, by mixing muscovite or sericite with lithium nitrate melted by heating and by subjecting the mixture to a reaction for a predetermined time. Dispersion of the swollen muscovite in water can be performed, for example, by removal of lithium nitrate with filtration and washing, and addition of pure water, and stirring.

In the swollen muscovite, a ratio of $Li^+$ ions and $K^+$ ions contained in an interlayer of the swollen muscovite is $Li^+$ : $K^+$ = 20 at% : 80 at% to 70 at% : 30 at%, preferably $Li^+$ : $K^+$ = 30 at% : 70 at% to 60 at% : 40 at%, more preferably $Li^+$ : $K^+$ = 40 at% : 60 at% to 60 at% : 40 at%, and still more preferably $Li^+$ : $K^+$ = 40 at% : 60 at% to 55 at% : 45 at%. The ratio is similar in a case where ions to be exchanged are $Ca^{2+}$ or $Mg^{2+}$ instead of $K^+$.

(Second Component)

The second component is smectite, preferably montmorillonite, saponite, hectorite, or beidellite. The smectite is a 2:1 type mineral having a structure including an Al octahedral layer between layers of silica tetrahedron. In the smectite, since Al is substituted with cations such as $Mg^{2+}$ ions, $Fe^{2+}$ ions, and $Fe^{3+}$ ions in the Al octahedral layer, a negative charge is generated. Accordingly, since a distance to a crystal lattice interlayer is long and retention of the cations is weak, water easily permeates to the interlayer, and layer lattices are likely to expand.

As a type of the smectite, montmorillonite or saponite is preferable, montmorillonite is more preferable, and Na-type montmorillonite or K-type montmorillonite is particularly preferable. The octahedral layer of montmorillonite is constituted by Al and Mg, has many crystal defects, and movement of $Li^+$ ions to the octahedral layer is easy. In addition, montmorillonite exists in nature, and is available at low cost.

A ratio of an addition weight of smectite to a sheet weight is preferably 5 to 55 wt%, and more preferably 10 to 50 wt%. The addition weight ratio is particularly preferably 20 wt%, and the closer the addition amount to 20 wt%, the further a water-resistant effect is improved at heating at 300°C.

In addition, the larger the addition amount of smectite, the further the strength of the sheet is improved. On the other hand, when smectite is excessively added, heat resistance deteriorates. In addition, winkles or warpage occur in an external appearance of the sheet.

(Third Component)

The third component is a filler, and preferably a clay or oxide filler. The third component is optionally contained in the sheet. Here, the clay or oxide filler is at least one or more kinds selected from the group consisting of muscovite, sericite, talc and kaolinite, and molten silica. Note that a fired filler can also be used as the filler. When a non-swelling filter such as muscovite is contained, it is possible to reduce a content ratio of smectite required for water resistance.

In the sheet of the invention, it is preferable that the filler that is the third component is added in addition to the Li-type clay layer that is the first component, and smectite that is the second component. For example, since a filler such as talc does not have the swelling property, water resistance can be raised even when the weight ratio of smectite to the entire sheet is small. In addition, when using a filler with high heat resistance, heat resistance of the sheet can be raised.

The weight ratio of the filler is preferably 0 to 80 wt%. The weight ratio is more preferably 50 wt%. In a case where the weight ratio of smectite in the sheet is the same, the more the filler, the further the effect of the water resistance is improved. On the other hand, when the filler is excessively contained, the handling strength is decreased.

(Total Ratio of First Component, Second Component, and Third Component in Sheet)

When the weight of the entire sheet is set to 100 wt%, the sum of the first component, the second component, and the third component is 90 wt% or more, preferably 92 wt% or more, more preferably 93 wt% or more, and still more preferably 95 wt% or more, further still more preferably 96 wt% or more, and particularly preferably 97 wt% or more.

(Ratio of First Component, Second Component, and Third Component in Blending)

When the total weight of the first component, the second component, and the third component is set to 100 wt%, the first component is preferably contained in an amount of 25 wt% or more and 80 wt% or less. The first component is contained in an amount of at least 25 wt% or more, preferably 30 wt% or more, more preferably 50 wt% or more, still more preferably 60 wt% or more, further still more preferably 75 wt% or more, and particularly preferably 80 wt% or more. In addition, the first component is contained in an amount of at most 100 wt% or less, 90 wt% or less, 80 wt% or less, 70 wt% or less, 65 wt% or less, or 50 wt% or less.

When the total weight of the first component, the second component, and the third component is set to 100 wt%, the first component is contained in an amount of 25 to 100 wt%, 30 to 100 wt%, 40 to 100 wt%, 50 to 100 wt%, 60 to 100 wt%, 65 to 100 wt%, 70 to 100 wt%, 75 to 100 wt%, 80 to 100 wt%, 25 to 95 wt%, 25 to 90 wt%, 25 to 80 wt%, 25 to 75 wt%, 25 to 70 wt%, 25 to 65 wt%, 25 to 60 wt%, or 25 to 50 wt%.

When the total weight of the first component, the second component, and the third component is set to 100 wt%, it is preferably that the second component is contained in an amount of 10 wt% or more and 50 wt% or less. The second component is contained at least in an amount of 5 wt% or more, preferably 7 wt% or more, and more preferably 10 wt% or more. In addition, the second component is contained in an amount of at most 50 wt% or less, 40 wt% or less, 30 wt% or less, 20 wt% or less, 10 wt% or less, or 5 wt% or less.

When the total weight of the first component, the second component, and the third component is set to 100 wt%, the second component is contained in an amount of 25 to 100 wt%, 30 to 100 wt%, 40 to 100 wt%, 50 to 100 wt%, 60 to 100 wt%, 65 to 100 wt%, 70 to 100 wt%, 75 to 100 wt%, 80 to 100 wt%, 25 to 95 wt%, 25 to 90 wt%, 25 to 80 wt%, 25 to 75 wt%, 25 to 70 wt%, 25 to 65 wt%, 25 to 60 wt%, or 25 to 50 wt%.

When the total weight of the first component, the second component, and the third component is set to 100 wt%, it is preferable that the third component is contained in an amount of 0 wt% or more and 80 wt% or less. The third component is contained in an amount of at least 10 wt% or more, preferably 20 wt% or more, more preferably 25 wt% or more, still more preferably 30 wt% or more, still more preferably 40 wt% or more, and particularly preferably 50 wt% or more. In addition, the third component is contained in an amount of at most 80 wt% or less, 75 wt% or less, 70 wt% or less, 65 wt% or less, 60 wt% or less, 55 wt% or less, or 50 wt% or less. A restoring property can be adjusted to any desired state by changing the ratio of the third component, but when excessively increasing the ratio, mechanical strength decreases.

When the total weight of the first component, the second component, and the third component is set to 100 wt%, the third component is contained in an amount of 0 to 80 wt%, 0 to 75 wt%, 0 to 70 wt%, 0 to 60 wt%, 0 to 50 wt%, 0 to 40 wt%, 0 to 35 wt%, 0 to 30 wt%, 0 to 25 wt%, 0 to 20 wt%, 5 to 80 wt%, 10 to 80 wt%, 20 to 80 wt%, 25 to 80 wt%, 30 to 80 wt%, 35 to 80 wt%, 40 to 80 wt%, or 50 to 80 wt%.

When the weight of the third component before heating is set to 100 wt%, a weight reduction rate when being heated to 1000°C is 15 wt% or less, preferably 13 wt% or less, more preferably 10 wt% or less, still more preferably 8 wt% or less, further still more preferably 7 wt% or less, and particularly preferably 6 wt% or less.

In the third component, the content of iron is small. Specifically, the content of iron in terms of iron oxide ($Fe_2O_3$) contained in the third component is 3 wt% or less, preferably 2 wt% or less, more preferably 1.5 wt% or less, still more preferably 1.0 wt% or less, further still more preferably 0.8 wt% or less, and particularly preferably 0.5 wt% or less. Here, in a case of being noted in terms of oxide, the content of each component can be measured by X-ray fluorescent analysis (XRF). Note that even when the content of each component is noted in terms of oxide, each component does not necessarily have to be contained as an oxide.

(Content Ratio of First Component and Second Component)

A ratio (weight ratio) of the content of the first component : the content of the second component is 10 : 90 to 100 : 0, 15 : 85 to 100 : 0, 20 : 80 to 100 : 0, 25 : 75 to 100 : 0, 30 : 70 to 100 : 0, 40 : 60 to 100 : 0, 50 : 50 to 100 : 0, 60 : 40 to 100 : 0, 65 : 35 to 100 : 0, 70 to 30 to 100 : 0, 75 : 25 to 100 : 0, 80 : 20 to 100 : 0, 25 : 75 to 95 : 5, 25 : 75 to 90 : 10, 25 : 75 to 80 : 20, 25 : 75 to 75 : 25, 25 : 75 to 70 : 30, 25 : 75 to 65 : 35, 25 : 75 to 60 : 40, or 25 : 75 to 50 : 50.

(Ratio of Swelling Clay and Non-Swelling Clay in Sheet)

When forming a sheet containing swelling clay and non-swelling clay by mixing and heating the swelling clay, and performing interlay ion exchange, and when the total weight of swelling clay that is the first component, swelling clay that is the second component, non-swelling clay (clay exhibiting the non-swelling property by heating), and the filler is set to 100 wt%, a preferred ratio of each component is shown below.

The swelling clay that is the first component is preferably contained in an amount of 5 wt% or more and 90 wt% or less, and more preferably 10 wt% or more and 70 wt% or less.

The swelling clay that is the second component is preferably contained in an amount of 2 wt% or more and 50 wt% or less, and more preferably 5 wt% or more and 40 wt% or less.

The non-swelling clay (clay exhibiting the non-swelling property by heating) is preferably contained in an amount of 5 wt% or more and 30 wt% or less, and more preferably 10 wt% or more and 25 wt% or less.

<Method of Manufacturing Sheet>

A method of manufacturing a sheet according to this embodiment includes a step of mixing the first component and the second component, and optionally the third component to form a mixture. In addition, the method includes a step of exchanging ions of the first component and the second component, molding the mixture in a sheet shape, and heating the resultant sheet.

$Li^+$ ions are moved to an interlayer of smectite by mixing swelling clay containing $Li^+$ ions in interlayer and smectite that is swelling clay, and the $Li^+$ ions in the interlayer of smectite are heated to move to an octahedral layer from the interlayer.

A solvent such as water is added to the mixture to adjust the viscosity of slurry which is suitable for a molding method. In addition, the mixture is molded by using extrusion molding, calendar rolls, a film applicator, a doctor blade, a bar coater, screen printing, or the like, and drying is performed to obtain a sheet.

<Sealing Material>

The sheet of this embodiment can be used as a sealing material, for example, a gasket, a packing, and the like for various pipes in various industries, fuel cells such as solid oxide fuel cells (SOFC), electrolytic cells such as solid oxide electrolytic cells (SOEC), exhaust pipes of automobiles, and the like. The sheet of this embodiment can be used as a sealing material itself, or can be incorporated as a part of a sealing material such as the gasket or the packing. Examples of the shape of the sealing material as a product include, but are not limited to, a sheet gasket, a spiral gasket, and a saw blade gasket.

(Binder: Not Contained)

The sheet of this embodiment and the sealing material containing the sheet substantially do not contain a binder. Here, the binder is not particularly limited, but examples thereof include rubbers and adhesives. More specifically, examples thereof include an acrylonitrile butadiene rubber, a styrene butadiene rubber, a polybutadiene rubber, a silicone rubber, an acrylic rubber, a natural rubber, a butyl rubber, a chloroprene rubber, an ethylene propylene rubber, a fluororubber, a urethane rubber, an acrylic adhesive, a silicone adhesive, and the like.

When the total weight of the sheet is set to 100 wt%, description of "binder is substantially not contained" represents that the content of the binder contained is less than 0.1 wt% (0.1 wt% or less), preferably less than 0.05 wt% (0.05 wt% or less), more preferably less than 0.01 wt% or less (0.01 wt% or less), still more preferably less than 0.001 wt% (0.001 wt% or less), and particularly preferably less than 0.0001 wt% (0.0001 wt% or less). Since the binder is not blended in the sheet of this embodiment, when the sheet is set as the sealing material, a sealing property is high and an outgas is not generated.

(Content of Iron)

It is preferable that in the sheet of this embodiment and the sealing material containing the sheet, the content of iron is small. Specifically, when the weight of the entire sheet is set to 100 wt%, the content of iron contained in the sheet of this embodiment and the sealing material containing the sheet in terms of iron oxide ($Fe_2O_3$) is 6 wt% or less, preferably 3 wt% or less, more preferably 2 wt% or less, still more preferably 1.5 wt% or less, further still more preferably 1.0 wt% or less, and particularly preferably 0.8 wt% or less.

In the sheet of this embodiment and the sealing material containing the sheet, it is preferable to use a muscovite-based film forming material as a Li-type film forming material. The sheet using the muscovite-based film forming material as the Li-type film forming material has a high insulation property because the content of iron is smaller as compared with a sheet using vermiculite-based film forming material and a phlogopite-based film forming material. Accordingly, the sheet using the muscovite-based film forming material as the Li-type film forming material is suitable for fuel cells such as solid oxide fuel cells (SOFC) and electrolytic cells such as solid oxide electrolytic cells (SOEC) required to have a high insulation property.

(Basis Weight)

A basis weight of the sheet of this embodiment and the sealing material containing the sheet is preferably 700 to 1300 g/m$^2$, more preferably 700 to 1200 g/m$^2$, still more preferably 750 to 1100 g/m$^2$, and particularly preferably 800 to 1050 g/m$^2$.

(Density)

A density of the sealing material of this embodiment is preferably 0.5 to 2.5 g/cm$^3$ at 2 MPa, more preferably 1.0 to 2.2 g/cm$^3$, and still more preferably 1.2 to 2.0 g/cm$^3$. In the present application, it is possible to realize a sealing material of which a density exceeds 1.4 g/cm$^3$. The lower the density at 2 MPa, the more it is likely to conform to unevenness of a counter member in compression and the less contact surface leakage.

The density of the sealing material of this embodiment is preferably 0.5 to 2.8 g/cm$^3$ at 20 MPa, more preferably 1.0 to 2.8 g/cm$^3$, and still more preferably 1.2 to 2.8 g/cm$^3$. In the present application, it is possible to realize a sealing material of which a density exceeds 1.4 g/cm$^3$. The higher the density at 20 MPa, the denser the sealing material at the time of fastening and the less substantial leakage.

(Compression Restoring Property)

In the sealing material of this embodiment, a value of a compression rate is 15% or more, preferably 20% or more, more preferably 25% or more, still more preferably 30% or more, and particularly preferably 40% or more. Th higher the compression rate, the more it is likely to conform unevenness of a counter member in compression and the less contact surface leakage.

In the sealing material of this embodiment, the value of the restoring rate is 5% or more, preferably 6% or more, more preferably 7% or more, still more preferably 8% or more, and particularly preferably 10% or more. The higher the restoring rate, the greater a reaction force at the time of fastening and the less contact surface leakage.

(Heating Dimension Stability)

The sealing material of this embodiment is highly heat resistant. Specifically, a diameter variation rate is 10% or less, preferably 8% or less, more preferably 5% or less, still more preferably 3% or less, and particularly preferably 1% or less.

(Volume Resistivity)

The sheet of this embodiment and the sealing material containing the sheet are excellent in electric insulating property in a high-temperature environment. Specifically, in the sheet of this embodiment and the sealing material containing the sheet, with regard to a value of volume resistivity as insulation performance in a high-temperature environment, it is preferable that the volume resistivity exceeds $2.0 \times 10^6$ $\Omega \cdot cm$ at a measurement condition of an application voltage of 100 V at 600°C, and the volume resistivity is $3.8 \times 10^6$ $\Omega \cdot cm$ or more at a measurement condition of an application voltage of 300 V at 600°C.

(Fuel Cell and Electrolytic Cell)

Since the sealing material of this embodiment has the above-described characteristics, and the sealing material can be used for fuel cells. That is, it is possible to provide a fuel cell including the sealing material of this embodiment. As the fuel cell, a planar SOFC is exemplified, but there is no limitation thereto. In addition, as the electrolytic cell, the solid oxide electrolytic cell (SOEC) is exemplified, but there is no limitation thereto.

<Method for Manufacturing Sealing Material>

The method for manufacturing the sealing material of this embodiment includes a step of incorporating the sheet manufactured by the method for manufacturing the sheet as a part of a gasket and a packing.

Examples

Hereinafter, the invention will be described in more detail based on specific examples, but the invention is not limited to the examples.

<1. Manufacturing of Swelling Clay and Manufacturing of Sheet>

[1. Manufacturing of Swollen Muscovite (Modification of Muscovite)]

Lithium nitrate that is eight times the weight of muscovite was heated and melted at 370°C and was mixed with muscovite. Ion exchange was carried out by reacting the mixture at 370°C for 40 hours. Then water was added to the mixture and the mixture was subjected to suction filtration. The mixture was washed with pure water and desalted. Pure water was added and the mixture was stirred to obtain slurry.

Note that as swollen vermiculite, a commercially available product (MicroLite HTS manufactured by Specialty Vermiculite Corp., LLC).

[1.2 Manufacturing of Sheet]

An aqueous dispersion of a Li-type clay layer obtained in [1.1] and an aqueous dispersion of smectite were prepared, and both the aqueous dispersions were mixed and molded by a doctor blade device, and drying was performed at 100°C for 24 hours to prepare a sheet. Note that in a case where a filler was contained, the aqueous dispersion of the Li-type clay layer and the aqueous dispersion of smectite, and the filler were prepared and mixed, and molding and drying were performed to prepare a sheet.

In experimental examples, as swelling clay (Li-type clay layer that is the first component), Li-type muscovite, and Li-type vermiculite were used. As swelling clay (smectite that is the second component), Na-type montmorillonite, K-type montmorillonite, Li-type montmorillonite, and Na-type saponite were used. As the filler that is the third component, talc, muscovite, kaolin, and plate-shaped silica were used.

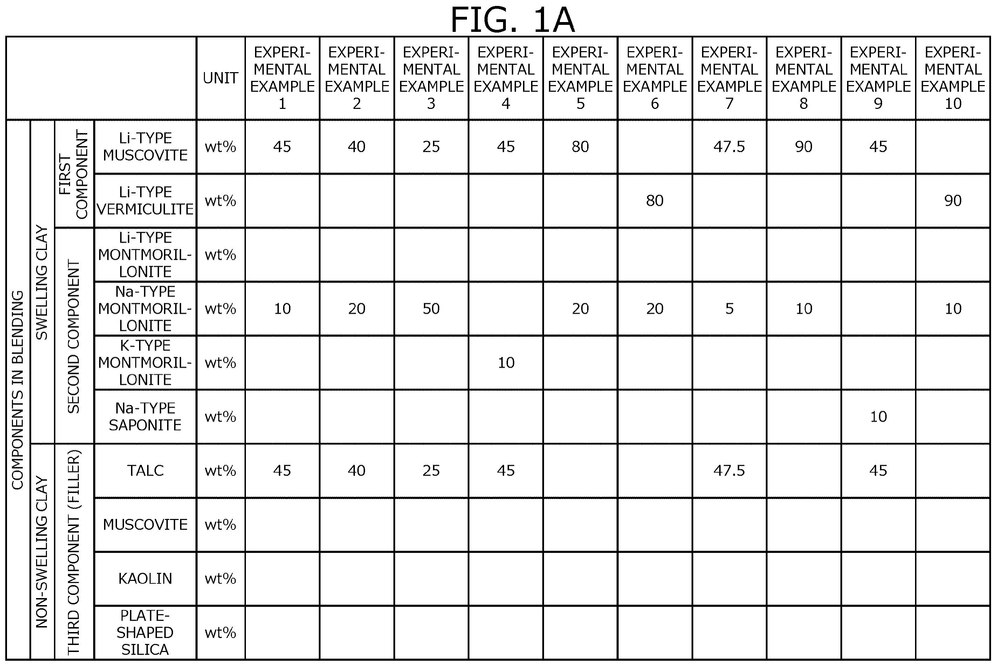

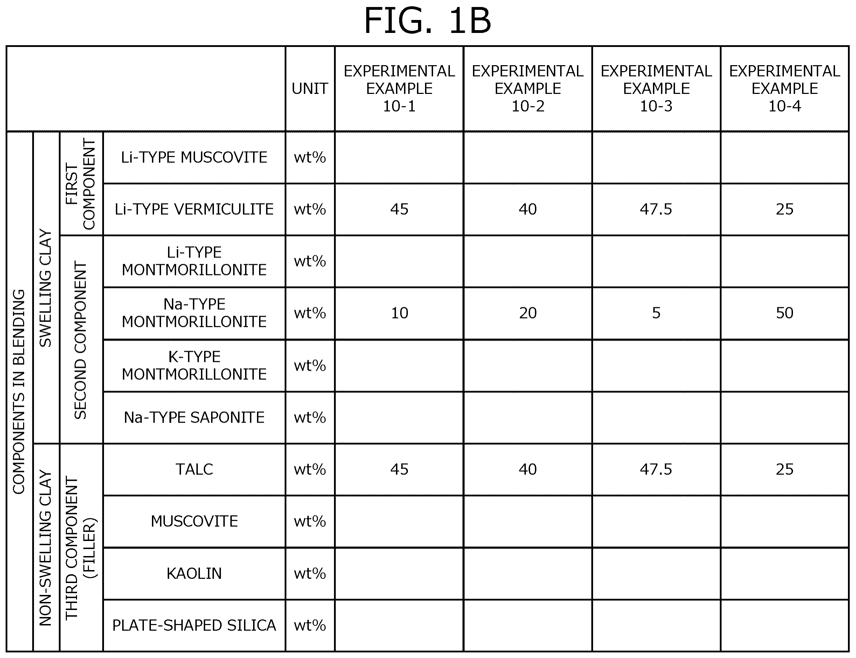

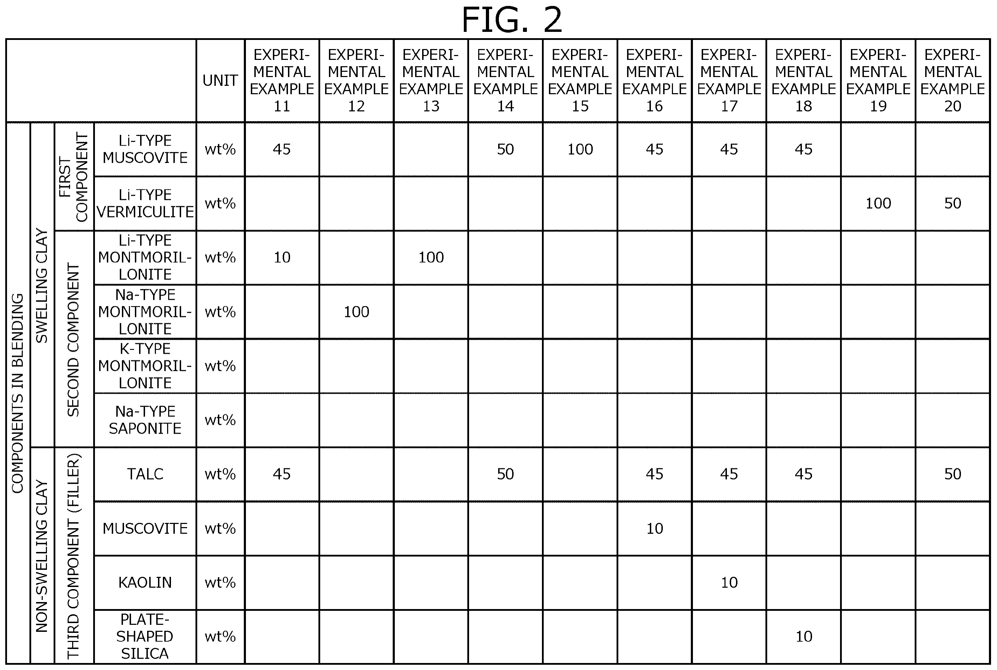

As Experimental Examples 1 to 20, sheets, in which component types and blending ratios of swelling clay that is the first component, swelling clay that is the second component, and the third component (filler) are different from each other, were prepared. The component types and the amount of components in blending in respective experimental examples are shown in FIG. 1A, FIG. 1B, and FIG. 2.

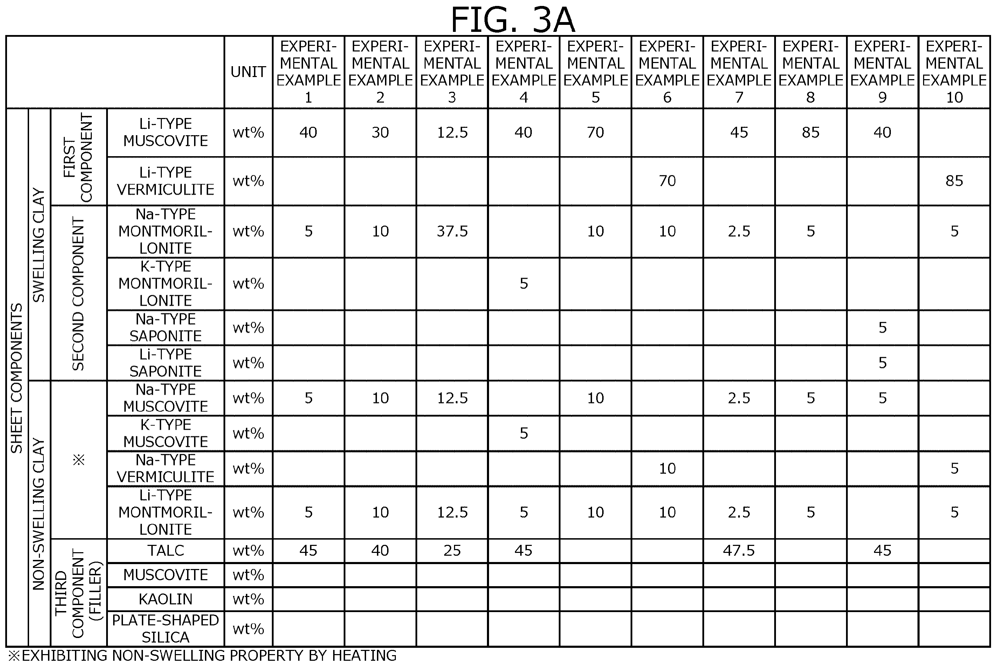

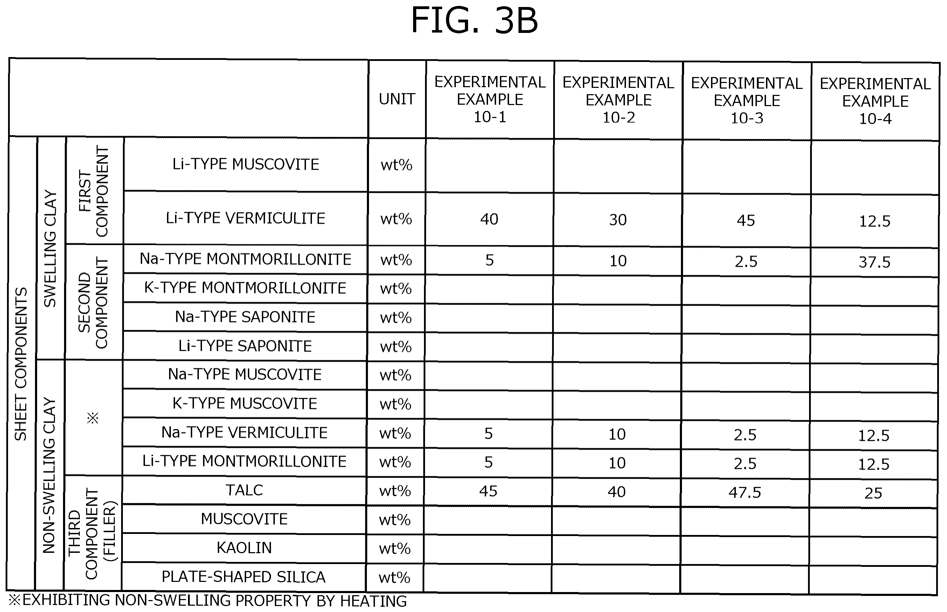

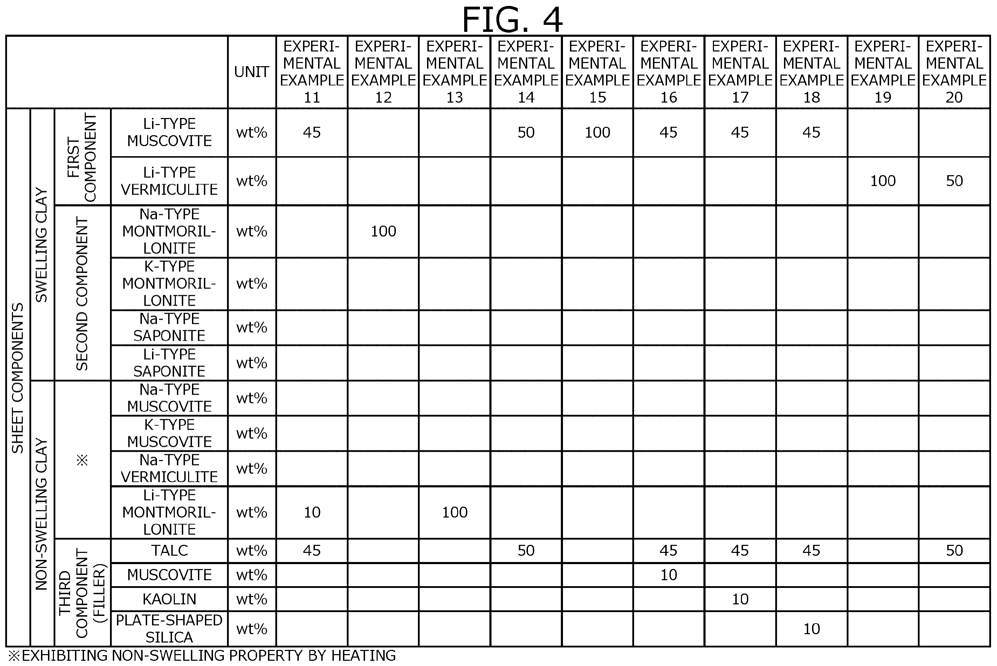

In addition, in the respective experimental examples, component types and the amount of components of sheets when manufacturing sheets containing swelling clay and non-swelling clay by mixing and heating the swelling clay, and performing interlayer ion exchange are shown in FIG. 3A, FIG. 3B, and FIG. 4. With regard to the amount of components in sheets described in FIG. 3A, FIG. 3B, and FIG. 4, calculation values calculated from the amount of components in blending are shown instead of actual measurement values of the prepared sheets.

<2. Evaluation Method of Sheet>

The following evaluation was performed with respect to the sheets of the experimental examples.

(Manufacturability)

Each of the sheets was punched out to obtain a test specimen having an outer diameter of 20 mm. The test specimen was dried at 100°C for 24 hours to prepare a sheet sample having a thickness of 0.5 mm. In a case where warpage was not observed in the sample after the test, it was marked as "○", and in a case where warpage was observed, it was marked as "x".

(Water Resistance)

Each of the sheets was punched out to obtain a test specimen having an outer diameter of 20 mm. The test specimen was heated at 300°C, 600°C, or 700°C for 24 hours, and then the test specimen was dried at 100°C for 15 hours. Then, the test specimen was placed and left as is in a desiccator and was cooled out, and the mass (m1) was measured by using a top-loading balance. The test specimen was immersed in pure water for 24 hours, the surface moisture was wiped off with a rag after the immersion, and the mass (m2) was measured using the top-loading balance. The value calculated by using the following Expression (1) was set as a water absorption rate.

$$\text{Water absorption rate (wt\%)} = ((m2 - m1)/m2) \times 100 \ldots$$

...

(Handling Property)

Each of the sheets was punched out to obtain a test specimen having an outer diameter of 20 mm. The test specimen was heated at 300°C, 600°C, and 700°C for 24 hours, and then the test specimen was immersed in pure water for 24 hours to prepare a sheet sample. When the sample after the test was handled, a sample that could be handled without collapsing was marked with "○", and a sample that collapsed and could not be handled was marked with "×".

<3. Evaluation Result of Sheet>

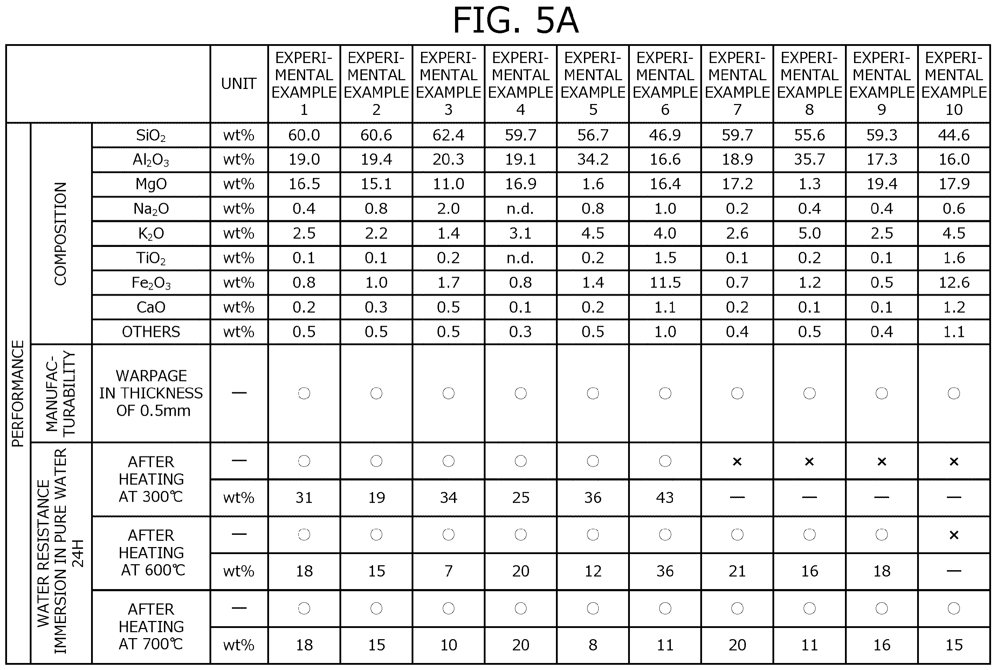

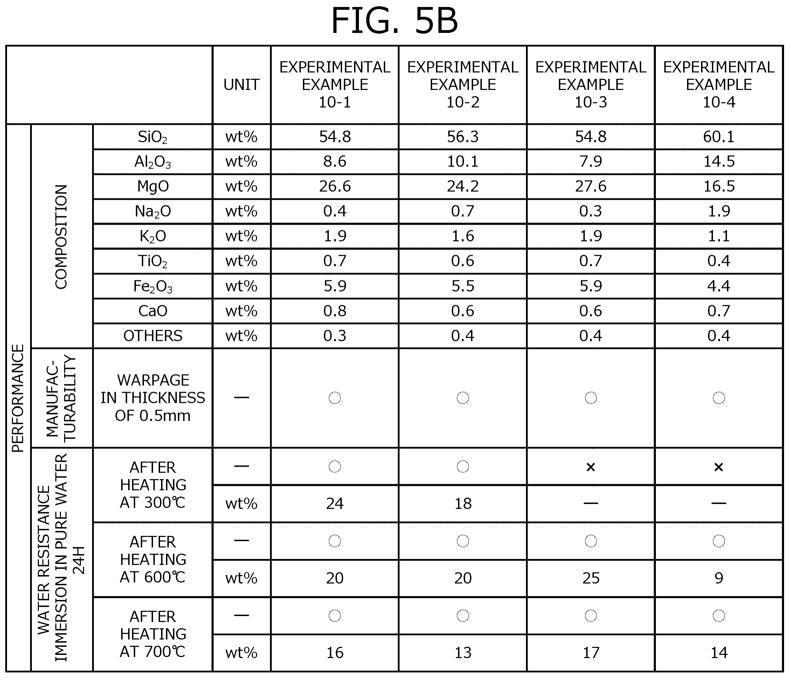

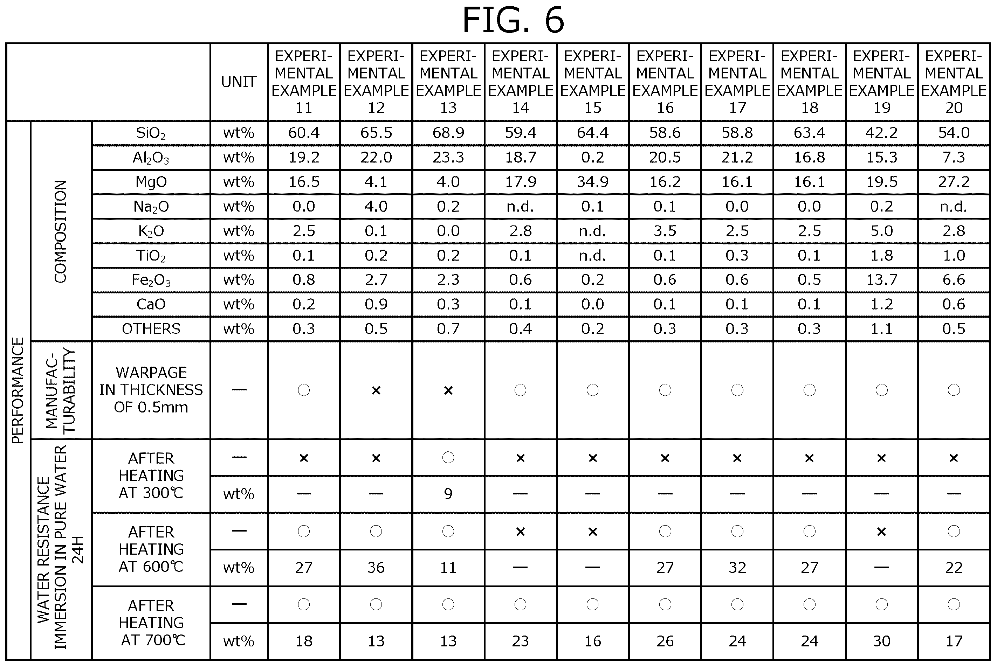

Evaluation results related to sheets of Experimental Examples 1 to 20 are shown in FIG. 5A, FIG. 5B, and FIG. 6.

(Water Resistance)

In sheets of Experimental Examples 1 to 6, 10-1, and 10-2 which contain Li-type muscovite or Li-type vermiculite as the first component of swelling clay, Na-type montmorillonite or K-type montmorillonite as the second component of swelling clay, and Na-type muscovite, K-type muscovite, or Na-type vermiculite which exhibit the non-swelling property by heating, the water absorption rate was 50 wt% or less in an immersion test in pure water for 24 hours after heating at 300°C.
Particularly, in Experimental Examples 1 to 5, 10-1, and 10-2, the water absorption rate was 40 wt% or less in an immersion test in pure water for 24 hours after heating at 300°C, the water absorption rate was 25 wt% or less in an immersion test in pure water for 24 hours after heating at 600°C, and the water absorption rate was 20 wt% or less in an immersion test in pure water for 24 hours after heating at 700°C.
When comparing Experimental Example 1 and Experimental Example 14 containing talc as the third component with each other, in Experimental Example 1 containing Na-type montmorillonite as the second component of swelling clay, the water absorption rate was 31% in an immersion test in pure water for 24 hours after heating at 300°C, and the water absorption rate was 18 wt% in an immersion test in pure water for 24 hours after heating at 600°C and after heating at 700°C, respectively.
In contrast, in Experimental Example 14 that does not contain Na-type montmorillonite as the second component of swelling clay, the sample was collapsed in an immersion test in pure water for 24 hours after heating at 300°C and after heating at 600°C, and the water absorption rate was 20 wt% or more in an immersion test in pure water for 24 hours after heating at 700°C.
When comparing Experimental Example 5 and Experimental Example 15 which do not contain talc as the third component with each other, in Experimental Example 5 containing Na-type montmorillonite as the second component of swelling clay, the water absorption rate was 36% in an immersion test in pure water for 24 hours after heating at 300°C, and the water absorption rate was 12 wt% in an immersion test in pure water for 24 hours after heating at 600°C.
In contrast, in Experimental Example 15 that does not contain Na-type montmorillonite as the second component of swelling clay, the sample was collapsed in an immersion test in pure water for 24 hours after heating at 300°C and after heating at 600°C.

Accordingly, in sheets containing Li-type clay layer as the first component of swelling clay, smectite as the second component of swelling clay, and clay exhibiting the non-swelling property by heating, it was revealed that the water absorption rate is low, and high water resistance is provided.

(Handling Property)

In the sheets of Experimental Examples 1 to 6, 10-1, and 10-2 containing Li-type muscovite or Li-type vermiculite as the first component of swelling clay, Na-type montmorillonite or K-type montmorillonite as the second component of swelling clay, and Na-type muscovite, K-type muscovite, or Na-type vermiculite that exhibits the non-swelling property by heating, handling was possible in an immersion test in pure water for 24 hours after heating at 300°C.

Particularly, when comparing Experimental Example 1 and Experimental Example 14 containing talc as the third component with each other, in Experimental Example 1 containing Na-type montmorillonite as the second component of welling clay, handling was possible in an immersion test in pure water for 24 hours after heating at 300°C, after heating at 600°C, and after heating at 700°C.

In contrast, in Experimental Example 14 that does not contain Na-type montmorillonite as the second component of swelling clay, the sample was collapsed in an immersion test in pure water for 24 hours after heating at 300°C and after heating at 600°C.

Accordingly, it was revealed that in sheets containing a Li-type clay layer as the first component of swelling clay, smectite as the second component of swelling clay, and clay exhibiting the non-swelling property by heating, the water absorption rate is low, and a high handling property is provided.

(With Regard to Mixing of Raw Materials)

When comparing Experimental Example 1 in which Li-type muscovite that is the first component and Na-type montmorillonite that is the second component are mixed, and Experimental Examples 12 and 15 which are Na-type montmorillonite and Li-type muscovite as non-mixed raw materials of elementary substances, respectively, in Experimental Example 1, the water absorption rate was 40 wt% or less in an immersion test in pure water for 24 hours after heating at 300°C, and handling was possible.

In contrast, when comparing Experimental Example 12 that is Na-type montmorillonite of elementary substance, and Experimental Example 15 that is Li-type muscovite of elementary substance, the water absorption rate was 40 wt% or more in an immersion test in pure water for 24 hours after heating at 300°C, and handling was impossible.

Accordingly, it was revealed that in sheets obtained by mixing the first component (Li-type muscovite) and the second component (smectite), the water absorption rate was low at 300°C, and a high water resistance is provided.

(With Regardt to Type of Smectite)

In the sheets of Experimental Examples 1 to 4 containing Li-type muscovite as the first component, 10 wt% or more of Na-type montmorillonite or K-type montmorillonite as the second component, and talc as the third component, the water absorption rate was 40% or less in an immersion test in pure water for 24 hours after heating at 300°C for 24 hours, the samples were not collapsed, and handling was possible.

In contrast, in the sheets of Experimental Examples 16, 17, and 18 which contain Li-type muscovite as the first component of swelling clay, do not contain the second component of swelling clay, and contain talc as the third component, the samples were collapsed in an immersion test in pure water for 24 hours after heating at 300°C for 24 hours, and handling was impossible.

Accordingly, it was revealed that in the sheets in which smectite as the second component was mixed with the first component (Li-type muscovite), the water absorption rate is lower at 300°C as compared with a sheet in which another clay material is mixed, and a high water resistance is provided.

(With Regard to Blending Ratio When Containing Filler)

In the sheets of Experimental Examples 1 to 4 containing Li-type muscovite as the first component, Na-type montmorillonite as the second component, and talc as the third component, the water absorption rate was 20% or less in an immersion test in pure water for 24 hours after heating at 700°C for 24 hours, the samples were not collapsed, and handling was possible.

Particularly, in the sheets of Experimental Examples 1 to 3 containing 10 wt% or more of Na-type montmorillonite as the second component, the water absorption rate was 20% or less in an immersion test in pure water for 24 hours after heating at 700°C and 600°C for 24 hours in any of the sheets, the samples were not collapsed, and the handling was possible.

Among these, in the sheet of Experimental Example 2 containing 20 wt% of Na-type montmorillonite, the water absorption rate was 20% or less in an immersion test in pure water for 24 hours after heating at 300°C for 24 hours.

In addition, in the sheet of Experimental Example 3 containing 50 wt% of Na-type montmorillonite, the water absorption rate was 10% or less in an immersion test in pure water for 24 hours after heating at 600°C for 24 hours, and the water absorption rate was lowest among Experimental Examples 1 to 3.

Accordingly, it was revealed that the water resistance can be controlled in accordance with the required temperature condition by adjusting the content of the second component.

(With Regard to Blending Ratio When Not-Containing Filler)

In the sheets of Experimental Examples 1, 2, 5, and 8 containing Li-type muscovite as the first component and 10 wt% to 20 wt% of Na-type montmorillonite as the second component, the water absorption rate was 20% or less in an immersion test in pure water for 24 hours after heating at 700°C and 600°C for 24 hours, the samples were not collapsed, and handling was possible.

Here, in the sheet of Experimental Example 1 containing talc as the third component, the water absorption rate was 40% or less at 300°C, the sample was not collapsed, and handling was possible.

In contrast, in the sheet of Experimental Example 8 that does not contain talc as the third component, the water absorption rate was 40% or more at 300°C, the sample was collapsed, and handling was impossible.

Accordingly, it was revealed that in a case where the filler is not contained, a large amount of second component is required to be water resistant at 300°C.

(With Regard to Type of Interlayer Ion)

In the sheets of Experimental Examples 1 and 4 containing Li-type muscovite as the first component, 10 wt% of Na-type montmorillonite or K-type montmorillonite as the second component, and talc as the third component, the water absorption rate was 20 wt% or less in an immersion test in pure water for 24 hours after heating at 700°C and 600°C for 24 hours in any of the sheets, the water absorption rate was 40% or less in an immersion test in pure water for 24 hours after heating at 300°C for 24 hours in any of the sheets, the samples were not collapsed, and handling was possible.

In contrast, in the sheet of Experimental Example 11 containing Li-type montmorillonite as the second component, the water absorption rate was 40% or less in an immersion test in pure water for 24 hours after heating at 600°C for 24 hours, the sample was collapsed in an immersion test in pure water for 24 hours after heating at 300°C for 24 hours, and handling was impossible.

Accordingly, it was revealed that a sheet containing Na-type or K-type montmorillonite exhibiting the swelling property has a higher water resistant-effect at 600°C and 300°C as compared with a sheet containing Li-type montmorillonite exhibiting the non-swelling property.

(With Regard to Type of Li-Type Clay Layer)

In Experimental Examples 5 and 6 which do not contain the third component, and contain Li-type muscovite or Li-type vermiculite as the first component, and 20 wt% of Na-type montmorillonite as the second component, the water absorption rate was 50% or less in an immersion test in pure water for 24 hours after heating at 600°C and 300°C for 24 hours, the samples were not collapsed, and handling was possible. Particularly, in Experimental Example 5 that contains Li-type muscovite as the first component, the water absorption rate was 40% or less in an immersion test in pure water for 24 hours after heating at 300°C, the water absorption rate was 20% or less in an immersion test in pure water for 24 hours after heating at 600°C.

In contrast, in Experimental Example 19 that does not contain the third component and contains Li-type vermiculite as an elementary substance as the first component, the water absorption rate was 20 wt% or more in an immersion test in pure water for 24 hours after heating at 700°C, and handling was impossible at 600°C and 300°C.

Accordingly, it was revealed that even in a case of containing Li-type vermiculite as the first component, water resistance is provided at 700°C, 600°C, and 300°C. In addition, it was revealed that Li-type muscovite has a higher water-resistant effect as compared with Li-type vermiculite.

In addition, it was revealed that as in Experimental Examples 10-1 to 10-4, even in a case of containing Li-type vermiculite as the first component, Na-type montmorillonite as the second component, and talc as the third component, the water resistance is provided. Particularly, it was revealed that in Experimental Examples 10-1 and 10-2, the water-resistant effect is high at 700°C, 600°C, and 300°C.

(Manufacturability)

In the sheets of Experimental Examples 1 to 10, and 10-1 to 10-4 containing a Li-type clay layer as the first component of swelling clay, smectite as the second component of swelling clay, and clay exhibiting the non-swelling property by heating, warpage was not shown with respect to a sheet sample having a thickness of 0.5 mm.

In the sheets of Experimental Examples 12 and 13 containing only smectite as the first component, warpage was shown with respect to a sheet sample having a thickness of 0.5 mm.

Accordingly, it was revealed that a sheet containing the Li-type clay layer as the first component of swelling clay, smectite as the second component of swelling clay, and clay exhibiting the non-swelling property by heating, warpage was not shown and manufacturability sufficient as a sheet is provided as compared with a sheet containing only smectite.

(With Regard to Generation of Outgas)

it was revealed that since the sheets of Experimental Examples 1 to 10, and 10-1 to 10-4 contain the first component (Li-type clay layer), the second component (smectite), and the third component (filler) as a main component, and do not contain fluorine or a resin such as a binder, the outgas is less generated.

(With Regard to Insulation Property)

it was revealed that in the sheets of Experimental Examples 1 to 5, and 7 to 9 containing Li-type muscovite as the first component and smectite as the second component, since the content of iron is as small as 1.7 wt% or less, a high insulation property is provided.

In addition, it was revealed that in the sheets of Experimental Examples 10-1 to 10-4 containing Li-type vermiculite as the first component, smectite as the second component, and talc as the third component, since the content of iron is as small as 6.0 wt% or less, a high insulation property is provided.

<4. Summary>

it was revealed that in sheets containing the Li-type clay layer as the first component of swelling clay, smectite as the second component of swelling clay, and clay exhibiting the non-swelling property by heating, the water absorption rate is low, and high water resistance and a high handling property are provided.

In addition, it was revealed that in a sheet obtained by mixing Li-type muscovite and smectite, the water absorption rate is low at 300°C and high water resistance is provided.

In addition, it was revealed that water resistance can be controlled in accordance with a required temperature condition by adjusting the content of smectite.

In addition, it was revealed that in a case of not containing the filler, it is required to increase the content of smectite to be water resistant at 300°C.

In addition, it was revealed that in a sheet containing Na-type and K-type montmorillonite exhibiting a swelling property, the water-resistant effect at 600°C and 300°C is higher as compared with a sheet containing Li-type montmorillonite exhibiting the non-swelling property.

In addition, it was revealed that even in a case of containing Li-type vermiculite as the first component, water resistance at 700°C, 600°C, and 300°C is provided. In addition, it was revealed that the water-resistant effect is higher in Li-type muscovite as compared with Li-type vermiculite.

In addition, it was revealed that a sheet obtained by mixing Li-type vermiculite, smectite, and talc has a high water-resistant effect at 700°C, 600°C, and 300°C.

In addition, it was revealed that a sheet containing the Li-type clay layer as the first component of swelling clay, smectite as the second component of swelling clay, and clay exhibiting the non-swelling property by heating does not show warpage and has manufacturability sufficient as a sheet as compared with a sheet containing only smectite.

In this way, when the Li-type clay layer having manufacturability for a thick sheet and smectite are combined, Li is supplied from the Li-type clay layer to smectite at the time of mixing, and Li is moved from an interlayer of smectite to an octahedral layer by heating, a hydrophilic property is lowered.

Therefore, it was revealed that high water resistance and a high handling property are provided, warpage is not shown at the time of manufacturing a sheet, and performance sufficient as a sheet in a high-temperature environment is provided.

In addition, since both the Li-type clay layer and smectite are swelling clay even when forming a sheet, layer structures of swelling clay were densely stacked to form a sheet. In addition, since smectite is peeled as thin as approximately 1 nm, the number of particles per unit weight increased, and the number of contact points between particles also increased.

**Claims**

1. A sheet, containing:

 swelling clay; and
 non-swelling clay,
 wherein the swelling clay contains a first component and a second component having a structure different from a structure of the first component, and
 the non-swelling clay is clay in which ions of the first component and the second component are exchanged in a dispersion medium, and which exhibits a non-swelling property by heating.

2. The sheet according to claim 1, containing:

 the first component;
 the second component; and
 a third component that is optionally contained,
 wherein the first component is the swelling clay in which an interlayer is substituted with Li,
 the second component is Na-type montmorillonite or **K**-type montmorillonite,
 the third component is a filler, and
 when a total weight of the first component, the second component, and the third component is set to 100 wt%, a content of the first component is 25 wt% or more and 80 wt% or less, a content of the second component is 10 wt% or more and 50 wt% or less, and a content of the third component is 0 wt% or more and 80 wt% or less.

3. The sheet according to claim 1 or 2,
 wherein a water absorption rate is 50% or less in an immersion test in pure water for 24 hours after heating at 300°C for 24 hours.

4. The sheet according to claim 1 or 2,
 wherein a water absorption rate is 50% or less in an immersion test in pure water for 24 hours after heating at 300°C for 24 hours, and the water absorption rate is 25% or less in an immersion test in pure water for 24 hours after heating at 600°C for 24 hours.

5. The sheet according to claim 1 or 2,
 wherein a water absorption rate is 50% or less in an immersion test in pure water for 24 hours after heating at 300°C for 24 hours, and the water absorption rate is 20% or less in an immersion test in pure water for 24 hours after heating at 700°C for 24 hours.

6. The sheet according to claim 1 or 2,
 wherein when a weight of the entire sheet is set to 100 wt%, a content of iron oxide is 6 wt% or less.

7. The sheet according to claim 1 or 2,

 wherein the first component is swollen muscovite, and
 in the swollen muscovite, at least a part of $K^+$ ions existing in an interlayer of muscovite is exchanged for $Li^+$ ion.

8. The sheet according to claim 2,
 wherein as the filler, talc, muscovite, sericite, kaolinite, or molten silica is contained.

9. A sealing material, comprising:
 the sheet according to claim 1 or 2.

10. The sealing material according to claim 9,
 wherein the sealing material is a sealing material for a fuel cell or an electrolytic cell.

11. A fuel cell or an electrolytic cell, comprising:
 the sealing material according to claim 10.

12. A method for manufacturing the sheet according to claim 2, comprising:

a step of mixing the first component, the second component, and the third component to form a mixture; and a step of exchanging ions of the first component and the second component, molding the mixture in a sheet shape, and heating the resultant sheet.

13. A method for manufacturing a sealing material, comprising:
a step of incorporating the sheet manufactured by the method for manufacturing a sheet according to claim 12 as a part of a gasket or a packing.

# FIG. 1A

| | | | | UNIT | EXPERI-MENTAL EXAMPLE 1 | EXPERI-MENTAL EXAMPLE 2 | EXPERI-MENTAL EXAMPLE 3 | EXPERI-MENTAL EXAMPLE 4 | EXPERI-MENTAL EXAMPLE 5 | EXPERI-MENTAL EXAMPLE 6 | EXPERI-MENTAL EXAMPLE 7 | EXPERI-MENTAL EXAMPLE 8 | EXPERI-MENTAL EXAMPLE 9 | EXPERI-MENTAL EXAMPLE 10 |
|---|---|---|---|---|---|---|---|---|---|---|---|---|---|---|
| COMPONENTS IN BLENDING | SWELLING CLAY | FIRST COMPONENT | Li-TYPE MUSCOVITE | wt% | 45 | 40 | 25 | 45 | 80 | | 47.5 | 90 | 45 | |
| | | | Li-TYPE VERMICULITE | wt% | | | | | | 80 | | | | 90 |
| | | SECOND COMPONENT | Li-TYPE MONTMORIL-LONITE | wt% | | | | | | | | | | |
| | | | Na-TYPE MONTMORIL-LONITE | wt% | 10 | 20 | 50 | | 20 | 20 | 5 | 10 | | 10 |
| | | | K-TYPE MONTMORIL-LONITE | wt% | | | | 10 | | | | | | |
| | | | Na-TYPE SAPONITE | wt% | | | | | | | | | 10 | |
| | NON-SWELLING CLAY | THIRD COMPONENT (FILLER) | TALC | wt% | 45 | 40 | 25 | 45 | | | 47.5 | | 45 | |
| | | | MUSCOVITE | wt% | | | | | | | | | | |
| | | | KAOLIN | wt% | | | | | | | | | | |
| | | | PLATE-SHAPED SILICA | wt% | | | | | | | | | | |

## FIG. 1B

| | | | UNIT | EXPERIMENTAL EXAMPLE 10-1 | EXPERIMENTAL EXAMPLE 10-2 | EXPERIMENTAL EXAMPLE 10-3 | EXPERIMENTAL EXAMPLE 10-4 |
|---|---|---|---|---|---|---|---|
| COMPONENTS IN BLENDING | SWELLING CLAY | FIRST COMPONENT | Li-TYPE MUSCOVITE | wt% | | | | |
| | | | Li-TYPE VERMICULITE | wt% | 45 | 40 | 47.5 | 25 |
| | | SECOND COMPONENT | Li-TYPE MONTMORILLONITE | wt% | | | | |
| | | | Na-TYPE MONTMORILLONITE | wt% | 10 | 20 | 5 | 50 |
| | | | K-TYPE MONTMORILLONITE | wt% | | | | |
| | | | Na-TYPE SAPONITE | wt% | | | | |
| | NON-SWELLING CLAY | THIRD COMPONENT (FILLER) | TALC | wt% | 45 | 40 | 47.5 | 25 |
| | | | MUSCOVITE | wt% | | | | |
| | | | KAOLIN | wt% | | | | |
| | | | PLATE-SHAPED SILICA | wt% | | | | |

EP 4 678 364 A1

# FIG. 2

| | | | | UNIT | EXPERI-MENTAL EXAMPLE 11 | EXPERI-MENTAL EXAMPLE 12 | EXPERI-MENTAL EXAMPLE 13 | EXPERI-MENTAL EXAMPLE 14 | EXPERI-MENTAL EXAMPLE 15 | EXPERI-MENTAL EXAMPLE 16 | EXPERI-MENTAL EXAMPLE 17 | EXPERI-MENTAL EXAMPLE 18 | EXPERI-MENTAL EXAMPLE 19 | EXPERI-MENTAL EXAMPLE 20 |
|---|---|---|---|---|---|---|---|---|---|---|---|---|---|---|
| COMPONENTS IN BLENDING | SWELLING CLAY | FIRST COMPONENT | Li-TYPE MUSCOVITE | wt% | 45 | | | 50 | 100 | 45 | 45 | 45 | | |
| | | | Li-TYPE VERMICULITE | wt% | | | | | | | | | 100 | 50 |
| | | SECOND COMPONENT | Li-TYPE MONTMORIL-LONITE | wt% | 10 | | 100 | | | | | | | |
| | | | Na-TYPE MONTMORIL-LONITE | wt% | | 100 | | | | | | | | |
| | | | K-TYPE MONTMORIL-LONITE | wt% | | | | | | | | | | |
| | | | Na-TYPE SAPONITE | wt% | | | | | | | | | | |
| | NON-SWELLING CLAY | THIRD COMPONENT (FILLER) | TALC | wt% | 45 | | | 50 | | 45 | 45 | 45 | | 50 |
| | | | MUSCOVITE | wt% | | | | | | 10 | | | | |
| | | | KAOLIN | wt% | | | | | | | 10 | | | |
| | | | PLATE-SHAPED SILICA | wt% | | | | | | | | 10 | | |

EP 4 678 364 A1

# FIG. 3A

| | | | | UNIT | EXPERIMENTAL EXAMPLE 1 | EXPERIMENTAL EXAMPLE 2 | EXPERIMENTAL EXAMPLE 3 | EXPERIMENTAL EXAMPLE 4 | EXPERIMENTAL EXAMPLE 5 | EXPERIMENTAL EXAMPLE 6 | EXPERIMENTAL EXAMPLE 7 | EXPERIMENTAL EXAMPLE 8 | EXPERIMENTAL EXAMPLE 9 | EXPERIMENTAL EXAMPLE 10 |
|---|---|---|---|---|---|---|---|---|---|---|---|---|---|---|
| SHEET COMPONENTS | SWELLING CLAY | FIRST COMPONENT | Li-TYPE MUSCOVITE | wt% | 40 | 30 | 12.5 | 40 | 70 | | 45 | 85 | 40 | |
| | | | Li-TYPE VERMICULITE | wt% | | | | | | 70 | | | | 85 |
| | | SECOND COMPONENT | Na-TYPE MONTMORILLONITE | wt% | 5 | 10 | 37.5 | | 10 | 10 | 2.5 | 5 | | 5 |
| | | | K-TYPE MONTMORILLONITE | wt% | | | | 5 | | | | | | |
| | | | Na-TYPE SAPONITE | wt% | | | | | | | | | 5 | |
| | | | Li-TYPE SAPONITE | wt% | | | | | | | | | 5 | |
| | NON-SWELLING CLAY | ※ | Na-TYPE MUSCOVITE | wt% | 5 | 10 | 12.5 | | 10 | | 2.5 | 5 | 5 | |
| | | | K-TYPE MUSCOVITE | wt% | | | | 5 | | | | | | |
| | | | Na-TYPE VERMICULITE | wt% | | | | | | 10 | | | | 5 |
| | | | Li-TYPE MONTMORILLONITE | wt% | 5 | 10 | 12.5 | 5 | 10 | 10 | 2.5 | 5 | | 5 |
| | | THIRD COMPONENT (FILLER) | TALC | wt% | 45 | 40 | 25 | 45 | | | 47.5 | | 45 | |
| | | | MUSCOVITE | wt% | | | | | | | | | | |
| | | | KAOLIN | wt% | | | | | | | | | | |
| | | | PLATE-SHAPED SILICA | wt% | | | | | | | | | | |

※EXHIBITING NON-SWELLING PROPERTY BY HEATING

EP 4 678 364 A1

# FIG. 3B

| | | | | UNIT | EXPERIMENTAL EXAMPLE 10-1 | EXPERIMENTAL EXAMPLE 10-2 | EXPERIMENTAL EXAMPLE 10-3 | EXPERIMENTAL EXAMPLE 10-4 |
|---|---|---|---|---|---|---|---|---|
| SHEET COMPONENTS | SWELLING CLAY | FIRST COMPONENT | Li-TYPE MUSCOVITE | wt% | | | | |
| | | | Li-TYPE VERMICULITE | wt% | 40 | 30 | 45 | 12.5 |
| | | SECOND COMPONENT | Na-TYPE MONTMORILLONITE | wt% | 5 | 10 | 2.5 | 37.5 |
| | | | K-TYPE MONTMORILLONITE | wt% | | | | |
| | | | Na-TYPE SAPONITE | wt% | | | | |
| | | | Li-TYPE SAPONITE | wt% | | | | |
| | NON-SWELLING CLAY | ※ | Na-TYPE MUSCOVITE | wt% | | | | |
| | | | K-TYPE MUSCOVITE | wt% | | | | |
| | | | Na-TYPE VERMICULITE | wt% | 5 | 10 | 2.5 | 12.5 |
| | | | Li-TYPE MONTMORILLONITE | wt% | 5 | 10 | 2.5 | 12.5 |
| | | THIRD COMPONENT (FILLER) | TALC | wt% | 45 | 40 | 47.5 | 25 |
| | | | MUSCOVITE | wt% | | | | |
| | | | KAOLIN | wt% | | | | |
| | | | PLATE-SHAPED SILICA | wt% | | | | |

※EXHIBITING NON-SWELLING PROPERTY BY HEATING

EP 4 678 364 A1

# FIG. 4

| SHEET COMPONENTS | | | | UNIT | EXPERI-MENTAL EXAMPLE 11 | EXPERI-MENTAL EXAMPLE 12 | EXPERI-MENTAL EXAMPLE 13 | EXPERI-MENTAL EXAMPLE 14 | EXPERI-MENTAL EXAMPLE 15 | EXPERI-MENTAL EXAMPLE 16 | EXPERI-MENTAL EXAMPLE 17 | EXPERI-MENTAL EXAMPLE 18 | EXPERI-MENTAL EXAMPLE 19 | EXPERI-MENTAL EXAMPLE 20 |
|---|---|---|---|---|---|---|---|---|---|---|---|---|---|---|
| | SWELLING CLAY | FIRST COMPONENT | Li-TYPE MUSCOVITE | wt% | 45 | | | 50 | 100 | 45 | 45 | 45 | | |
| | | | Li-TYPE VERMICULITE | wt% | | | | | | | | | 100 | 50 |
| | | SECOND COMPONENT | Na-TYPE MONTMORIL-LONITE | wt% | | 100 | | | | | | | | |
| | | | K-TYPE MONTMORIL-LONITE | wt% | | | | | | | | | | |
| | | | Na-TYPE SAPONITE | wt% | | | | | | | | | | |
| | | | Li-TYPE SAPONITE | wt% | | | | | | | | | | |
| | NON-SWELLING CLAY | ※ | Na-TYPE MUSCOVITE | wt% | | | | | | | | | | |
| | | | K-TYPE MUSCOVITE | wt% | | | | | | | | | | |
| | | | Na-TYPE VERMICULITE | wt% | | | | | | | | | | |
| | | | Li-TYPE MONTMORIL-LONITE | wt% | 10 | | 100 | | | | | | | |
| | | THIRD COMPONENT (FILLER) | TALC | wt% | 45 | | | 50 | | 45 | 45 | 45 | | 50 |
| | | | MUSCOVITE | wt% | | | | | | 10 | | | | |
| | | | KAOLIN | wt% | | | | | | | 10 | | | |
| | | | PLATE-SHAPED SILICA | wt% | | | | | | | | 10 | | |

※EXHIBITING NON-SWELLING PROPERTY BY HEATING

EP 4 678 364 A1

# FIG. 5A

| | | | UNIT | EXPERI-MENTAL EXAMPLE 1 | EXPERI-MENTAL EXAMPLE 2 | EXPERI-MENTAL EXAMPLE 3 | EXPERI-MENTAL EXAMPLE 4 | EXPERI-MENTAL EXAMPLE 5 | EXPERI-MENTAL EXAMPLE 6 | EXPERI-MENTAL EXAMPLE 7 | EXPERI-MENTAL EXAMPLE 8 | EXPERI-MENTAL EXAMPLE 9 | EXPERI-MENTAL EXAMPLE 10 |
|---|---|---|---|---|---|---|---|---|---|---|---|---|---|
| PERFORMANCE | COMPOSITION | $SiO_2$ | wt% | 60.0 | 60.6 | 62.4 | 59.7 | 56.7 | 46.9 | 59.7 | 55.6 | 59.3 | 44.6 |
| | | $Al_2O_3$ | wt% | 19.0 | 19.4 | 20.3 | 19.1 | 34.2 | 16.6 | 18.9 | 35.7 | 17.3 | 16.0 |
| | | MgO | wt% | 16.5 | 15.1 | 11.0 | 16.9 | 1.6 | 16.4 | 17.2 | 1.3 | 19.4 | 17.9 |
| | | $Na_2O$ | wt% | 0.4 | 0.8 | 2.0 | n.d. | 0.8 | 1.0 | 0.2 | 0.4 | 0.4 | 0.6 |
| | | $K_2O$ | wt% | 2.5 | 2.2 | 1.4 | 3.1 | 4.5 | 4.0 | 2.6 | 5.0 | 2.5 | 4.5 |
| | | $TiO_2$ | wt% | 0.1 | 0.1 | 0.2 | n.d. | 0.2 | 1.5 | 0.1 | 0.2 | 0.1 | 1.6 |
| | | $Fe_2O_3$ | wt% | 0.8 | 1.0 | 1.7 | 0.8 | 1.4 | 11.5 | 0.7 | 1.2 | 0.5 | 12.6 |
| | | CaO | wt% | 0.2 | 0.3 | 0.5 | 0.1 | 0.2 | 1.1 | 0.2 | 0.1 | 0.1 | 1.2 |
| | | OTHERS | wt% | 0.5 | 0.5 | 0.5 | 0.3 | 0.5 | 1.0 | 0.4 | 0.5 | 0.4 | 1.1 |
| | MANUFAC-TURABILITY | WARPAGE IN THICKNESS OF 0.5mm | — | ○ | ○ | ○ | ○ | ○ | ○ | ○ | ○ | ○ | ○ |
| | WATER RESISTANCE IMMERSION IN PURE WATER 24H | AFTER HEATING AT 300℃ | — | ○ | ○ | ○ | ○ | ○ | ○ | × | × | × | × |
| | | | wt% | 31 | 19 | 34 | 25 | 36 | 43 | — | — | — | — |
| | | AFTER HEATING AT 600℃ | — | ○ | ○ | ○ | ○ | ○ | ○ | ○ | ○ | ○ | × |
| | | | wt% | 18 | 15 | 7 | 20 | 12 | 36 | 21 | 16 | 18 | — |
| | | AFTER HEATING AT 700℃ | — | ○ | ○ | ○ | ○ | ○ | ○ | ○ | ○ | ○ | ○ |
| | | | wt% | 18 | 15 | 10 | 20 | 8 | 11 | 20 | 11 | 16 | 15 |

EP 4 678 364 A1

# FIG. 5B

| | | | UNIT | EXPERIMENTAL EXAMPLE 10-1 | EXPERIMENTAL EXAMPLE 10-2 | EXPERIMENTAL EXAMPLE 10-3 | EXPERIMENTAL EXAMPLE 10-4 |
|---|---|---|---|---|---|---|---|
| PERFORMANCE | COMPOSITION | $SiO_2$ | wt% | 54.8 | 56.3 | 54.8 | 60.1 |
| | | $Al_2O_3$ | wt% | 8.6 | 10.1 | 7.9 | 14.5 |
| | | MgO | wt% | 26.6 | 24.2 | 27.6 | 16.5 |
| | | $Na_2O$ | wt% | 0.4 | 0.7 | 0.3 | 1.9 |
| | | $K_2O$ | wt% | 1.9 | 1.6 | 1.9 | 1.1 |
| | | $TiO_2$ | wt% | 0.7 | 0.6 | 0.7 | 0.4 |
| | | $Fe_2O_3$ | wt% | 5.9 | 5.5 | 5.9 | 4.4 |
| | | CaO | wt% | 0.8 | 0.6 | 0.6 | 0.7 |
| | | OTHERS | wt% | 0.3 | 0.4 | 0.4 | 0.4 |
| | MANUFAC-TURABILITY | WARPAGE IN THICKNESS OF 0.5mm | — | ○ | ○ | ○ | ○ |
| | WATER RESISTANCE IMMERSION IN PURE WATER 24H | AFTER HEATING AT 300℃ | — | ○ | ○ | × | × |
| | | | wt% | 24 | 18 | — | — |
| | | AFTER HEATING AT 600℃ | — | ○ | ○ | ○ | ○ |
| | | | wt% | 20 | 20 | 25 | 9 |
| | | AFTER HEATING AT 700℃ | — | ○ | ○ | ○ | ○ |
| | | | wt% | 16 | 13 | 17 | 14 |

EP 4 678 364 A1

# FIG. 6

| | | | UNIT | EXPERI-MENTAL EXAMPLE 11 | EXPERI-MENTAL EXAMPLE 12 | EXPERI-MENTAL EXAMPLE 13 | EXPERI-MENTAL EXAMPLE 14 | EXPERI-MENTAL EXAMPLE 15 | EXPERI-MENTAL EXAMPLE 16 | EXPERI-MENTAL EXAMPLE 17 | EXPERI-MENTAL EXAMPLE 18 | EXPERI-MENTAL EXAMPLE 19 | EXPERI-MENTAL EXAMPLE 20 |
|---|---|---|---|---|---|---|---|---|---|---|---|---|---|
| PERFORMANCE | COMPOSITION | $SiO_2$ | wt% | 60.4 | 65.5 | 68.9 | 59.4 | 64.4 | 58.6 | 58.8 | 63.4 | 42.2 | 54.0 |
| | | $Al_2O_3$ | wt% | 19.2 | 22.0 | 23.3 | 18.7 | 0.2 | 20.5 | 21.2 | 16.8 | 15.3 | 7.3 |
| | | MgO | wt% | 16.5 | 4.1 | 4.0 | 17.9 | 34.9 | 16.2 | 16.1 | 16.1 | 19.5 | 27.2 |
| | | $Na_2O$ | wt% | 0.0 | 4.0 | 0.2 | n.d. | 0.1 | 0.1 | 0.0 | 0.0 | 0.2 | n.d. |
| | | $K_2O$ | wt% | 2.5 | 0.1 | 0.0 | 2.8 | n.d. | 3.5 | 2.5 | 2.5 | 5.0 | 2.8 |
| | | $TiO_2$ | wt% | 0.1 | 0.2 | 0.2 | 0.1 | n.d. | 0.1 | 0.3 | 0.1 | 1.8 | 1.0 |
| | | $Fe_2O_3$ | wt% | 0.8 | 2.7 | 2.3 | 0.6 | 0.2 | 0.6 | 0.6 | 0.5 | 13.7 | 6.6 |
| | | CaO | wt% | 0.2 | 0.9 | 0.3 | 0.1 | 0.0 | 0.1 | 0.1 | 0.1 | 1.2 | 0.6 |
| | | OTHERS | wt% | 0.3 | 0.5 | 0.7 | 0.4 | 0.2 | 0.3 | 0.3 | 0.3 | 1.1 | 0.5 |
| | MANUFAC-TURABILITY | WARPAGE IN THICKNESS OF 0.5mm | — | ○ | × | × | ○ | ○ | ○ | ○ | ○ | ○ | ○ |
| | WATER RESISTANCE IMMERSION IN PURE WATER 24H | AFTER HEATING AT 300℃ | — | × | × | ○ | × | × | × | × | × | × | × |
| | | | wt% | — | — | 9 | — | — | — | — | — | — | — |
| | | AFTER HEATING AT 600℃ | — | ○ | ○ | ○ | × | × | ○ | ○ | ○ | × | ○ |
| | | | wt% | 27 | 36 | 11 | — | — | 27 | 32 | 27 | — | 22 |
| | | AFTER HEATING AT 700℃ | — | ○ | ○ | ○ | ○ | ○ | ○ | ○ | ○ | ○ | ○ |
| | | | wt% | 18 | 13 | 13 | 23 | 16 | 26 | 24 | 24 | 30 | 17 |

EP 4 678 364 A1

## INTERNATIONAL SEARCH REPORT

| International application No. |
| --- |
| **PCT/JP2024/002513** |

| **A.** | **CLASSIFICATION OF SUBJECT MATTER** |
| --- | --- |

*B28B 1/30*(2006.01)i; *C01B 33/40*(2006.01)i; *C25B 13/05*(2021.01)i; *H01M 8/12*(2016.01)i; *H01M 8/0282*(2016.01)i
FI:　B28B1/30 101; C01B33/40; H01M8/0282; C25B13/05; H01M8/12 101

According to International Patent Classification (IPC) or to both national classification and IPC

| **B.** | **FIELDS SEARCHED** |
| --- | --- |

Minimum documentation searched (classification system followed by classification symbols)

B28B1/30; C01B33/40; C25B13/05; H01M8/12; H01M8/0282

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| **C.** | **DOCUMENTS CONSIDERED TO BE RELEVANT** |
| --- | --- |

| Category* | Citation of document, with indication, where appropriate, of the relevant passages | Relevant to claim No. |
| --- | --- | --- |
| X | JP 2011-236065 A (TOMOEGAWA PAPER CO., LTD.) 24 November 2011 (2011-11-24) claims, paragraphs [0010], [0018], [0040], [0046]-[0047], table 1, example 3 | 1-7, 9-13 |
| Y | claims, paragraphs [0010], [0018], [0040], [0046]-[0047], table 1, example 3 | 8 |
| Y | JP 2012-193750 A (JAPAN MATEKKUSU K.K.) 11 October 2012 (2012-10-11) paragraph [0070] | 8 |
| A | entire text, all drawings | 1-7, 913 |
| A | JP 6-100315 A (NADEAU, Paul H.) 12 April 1994 (1994-04-12) entire text, all drawings | 1-13 |
| A | WO 2016/125486 A1 (NICHIAS CORP.) 11 August 2016 (2016-08-11) entire text, all drawings | 1-13 |
| A | JP 2012-177102 A (SUMITOMO CHEMICAL COMPANY, LIMITED) 13 September 2012 (2012-09-13) entire text, all drawings | 1-13 |

☑ Further documents are listed in the continuation of Box C.　　☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **28 March 2024** | **09 April 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**

International application No.

**PCT/JP2024/002513**

### C. DOCUMENTS CONSIDERED TO BE RELEVANT

| Category* | Citation of document, with indication, where appropriate, of the relevant passages | Relevant to claim No. |
|---|---|---|
| A | WO 2019/221196 A1 (DAINIPPON INK & CHEMICALS) 21 November 2019 (2019-11-21) entire text, all drawings | 1-13 |

Form PCT/ISA/210 (second sheet) (July 2022)

**INTERNATIONAL SEARCH REPORT**
Information on patent family members

International application No.

**PCT/JP2024/002513**

| Patent document cited in search report | | | Publication date (day/month/year) | Patent family member(s) | | | Publication date (day/month/year) |
|---|---|---|---|---|---|---|---|
| JP | 2011-236065 | A | 24 November 2011 | (Family: none) | | | |
| JP | 2012-193750 | A | 11 October 2012 | (Family: none) | | | |
| JP | 6-100315 | A | 12 April 1994 | US entire text, all drawings EP | 4687521 153879 | A A2 | |
| WO | 2016/125486 | A1 | 11 August 2016 | US entire text, all drawings EP CN | 2018/0023706 3255321 107208798 | A1 A1 A | |
| JP | 2012-177102 | A | 13 September 2012 | (Family: none) | | | |
| WO | 2019/221196 | A1 | 21 November 2019 | (Family: none) | | | |

Form PCT/ISA/210 (patent family annex) (July 2022)

28

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017115399 A
- JP 6999649 B
- JP 3855003 B
- JP 4973856 B
- JP 2022109896 A